# EUROPÄISCHE PATENTSCHRIFT

(11) **EP 3 466 806 B1**
(45) Veröffentlichungstag und Bekanntmachung des Hinweises auf die Patenterteilung: **28.07.2021**
(21) Anmeldenummer: 17195554.5
(22) Anmeldetag: 09.10.2017
(51) Int. Cl.: B63H 3/08, B64C 11/40, F15B 9/10, F15B 20/00

(54) **VERSTELLPROPELLER-EINHEIT MIT EINER HYDRAULISCHEN STEUERVORRICHTUNG**
CONTROLLABLE PITCH PROPELLER UNIT WITH HYDRAULIC CONTROL DEVICE
UNITÉ D'HÉLICE À PAS RÉGLABLE POURVUE D'UN DISPOSITIF DE COMMANDE HYDRAULIQUE

(43) Veröffentlichungstag der Anmeldung: 10.04.2019
(73) Patentinhaber: MT-Propeller Entwicklung GmbH, 94348 Atting (DE)
(72) Erfinder: ALBRECHT, Martin, 94315 Straubing (DE); MÜHLBAUER, Gerd, 94360 Mitterfels (DE)
(74) Vertreter: advotec.

(56) Entgegenhaltungen:
- EP-A1- 2 883 788
- DE-A1- 2 319 135
- DE-A1- 2 750 291
- DE-A1- 19 600 660

## Beschreibung

Die Erfindung betrifft eine Steuervorrichtung für einen hydraulischen Verstellpropeller eines Luft-, Land- oder Wasserfahrzeugs sowie eine Propeller-Einheit mit einer derartigen Steuervorrichtung.

Eine derartige Steuervorrichtung ist aus der Praxis, wie beispielsweise aus DE 196 00 660 A1, bekannt und dient zur Einstellung eines Einstellwinkels von Propellerblättern eines hydraulischen Verstellpropellers. Sie umfasst ein Servoventil, das stromab einer Stromerzeugungseinrichtung angeordnet ist und dessen Eingangsdruck ein von der Druckerzeugungseinrichtung zur Verfügung gestellter Basisdruck ist und dessen Ausgangsdruck einen Steuerdruck in einer Steuerleitung definiert, die mit einem Druckraum eines hydraulischen Verstellpropellers verbunden ist. Der hydraulische Verstellpropeller umfasst mindestens zwei Propellerblätter, die im Bereich einer Propellernabe gelagert sind und deren Einstellwinkel mittels einer in der Propellernabe angeordneten Kolbeneinheit verstellbar ist. Die Position der Kolbeneinheit ist abhängig von dem in dem Druckraum herrschenden Hydraulikdruck. Der Einstellwinkel der Propellerblätter ist über den Steuer- bzw. Regeldruck zwischen einem einer Segelstellung zugeordneten Einstellwinkel, bei dem die Propellerblätter im Flugbetrieb des betreffenden Flugzeugs den geringsten Luftwiderstand bieten, einem minimalen, dem betreffenden Flugzeug einen Vortrieb zur Verfügung stellenden Einstellwinkel und einem negativen Einstellwinkel verstellbar, der einer Umkehrschubstellung der Propellerblätter entspricht. In der Umkehrschubstellung übt der Verstellpropeller bei gleichbleibender Drehrichtung des Propellers damit eine Bremskraft auf das Flugzeug aus. Diese Bremskraft ist ggf. nach dem Aufsetzen des Flugzeugs auf eine Landebahn erforderlich, um dessen Bremsweg zu verkürzen. Es ist erforderlich, die Propellereinheit derart abzusichern, dass im Flugbetrieb des Flugzeugs die Umkehrschubstellung der Propellerblätter nicht einstellbar ist.

Der Erfindung liegt die Aufgabe zugrunde, eine Steuervorrichtung für einen hydraulischen Verstellpropeller zu schaffen, die in integrierter Weise Mittel aufweist, die einerseits die Verstellung des Einstellwinkels der Propellerblätter des Verstellpropellers mittels eines Servoventils ermöglichen, aber bei einem Ausfall des Servoventils in zuverlässiger Weise verhindern, dass sich die Propellerblätter in ihre Umkehrschubstellung verstellen.

Diese Aufgabe ist erfindungsgemäß durch die Steuervorrichtung mit den Merkmalen des Patentanspruches 1 gelöst.

Gemäß der Erfindung wird also eine Propeller-Einheit eines Luft-, Land-, oder Wasserfahrzeugs mit einem hydraulischen Verstellpropeller mit Propellerblättern, deren Einstellwinkel hydraulische verstellbar ist, sowie mit einer Steuervorrichtung vorgeschlagen, umfassend eine Hydraulikölspeiseleitung, eine mit dem Verstellpropeller verbindbare Steuerleitung, eine mit der Hydraulikölspeiseleitung verbundene Druckerzeugungseinrichtung, die Hydrauliköl mit einem Basisdruck zur Verfügung stellt, ein Servoventil, das stromab der Druckerzeugungseinrichtung angeordnet ist, dessen Eingangsdruck der Basisdruck ist und dessen Ausgangsdruck in einem Normalbetrieb einen Steuerdruck in der Steuerleitung definiert und das mit einem Steuergerät verbunden ist, das ein Steuersignal zur Veränderung des Steuerdrucks liefert, und Druckreduziermittel, die die stromab des Servoventils und stromauf der Steuerleitung angeordnet sind, die mechanisch angesteuert sind und die bei einem Ausfall des Servoventils den Steuerdruck in der Steuerleitung ändern, wobei das Servoventil ein Ventilelement aufweist, dessen Stellung den Ausgangsdruck des Servoventils definiert, und eine elektromagnetische Hauptstelleinrichtung und eine elektromagnetische Reservestelleinrichtung für das Ventilelement umfasst, und die Reservestelleinrichtung bei einem Ausfall der Hauptstelleinrichtung deren Funktion zum Betätigen des Ventilelements übernimmt, wobei das Steuergerät als FADEC ausgebildet ist und zur elektronischen Ansteuerung des Servoventils in Abhängigkeit von einer Drehzahl des Verstellpropellers dient.

Die Steuervorrichtung nach der Erfindung umfasst mithin mechanisch angesteuerte Druckreduziermittel, die beispielsweise drehzahlabhängig und/oder in Abhängigkeit von einem mechanisch gemessenen Einstellwinkel der Propellerblätter arbeiten und im Flugbetrieb des Flugzeugs bei einem Ausfall des Servoventils aufgrund einer Erhöhung der Drehzahl des Propellers oder aufgrund eines mechanisch gemessenen kritischen Einstellwinkels den Steuerdruck in der Steuerleitung absenkt. Damit kann sich der

Einstellwinkel der Propellerblätter des Verstellpropellers durch die Wirkung von Kräften, die beispielsweise von einer Rückstellfederanordnung und/oder Fliehgewichten ausgeübt werden, in Richtung der Segelstellung verstellen. Der Steuerdruck in der Steuerleitung kann also nicht soweit ansteigen, dass sich die Propellerblätter ohne entsprechende Freigabe in ihre Umkehrschubstellung verstellen. Wenn das Servoventil ausfällt, entspricht dessen Ausgangsdruck dem Eingangsdruck, d. h. dem von der Druckerzeugungseinrichtung zur Verfügung gestellten Basisdruck, dem durch die Druckmindereinrichtung entgegengewirkt wird.

Bei einer speziellen Ausführungsform der Steuervorrichtung nach der Erfindung umfassen die Druckreduziermittel eine Druckmindereinrichtung, die stromab des Servoventils und stromauf der Steuerleitung angeordnet ist und die bei einem Ausfall des Servoventils den Steuerdruck in der Steuerleitung in Abhängigkeit von einer Drehzahl des Propellers ändert.

Bei einer bevorzugten Ausführungsform der Steuervorrichtung nach der Erfindung erkennt die einen sogenannten Overspeed Governor bildende Druckmindereinrichtung die Drehzahl des Propellers, bei der der Steuerdruck in der Steuerleitung geändert werden muss, über eine Antriebswelle, die mit einem Getriebe eines Triebwerks des Verstellpropellers gekoppelt ist. Die Drehzahl, bei der die Druckmindereinrichtung den Steuerdruck in der Steuerleitung senkt, beträgt beispielsweise 103 % der Drehzahl, mit der der Propeller im Normalbetrieb betrieben wird.

Die drehzahlabhängig arbeitende Druckmindereinrichtung ist insbesondere ein Ventil mit einem Ventilschieber, dessen Stellung durch Fliehgewichte definiert ist, die von der Antriebswelle angetrieben sind. Bei einer Erhöhung der Drehzahl verschieben die Fliehgewichte den Ventilschieber gegen die Kraft einer Vorspannfeder, sodass das Ventil in eine Öffnungsstellung gebracht wird und der Steuerdruck in der Steuerleitung abgesenkt wird.

Bei einer weiteren bevorzugten Ausführungsform der Steuervorrichtung nach der Erfindung umfassen die Druckreduziermittel des Weiteren ein Sicherungsventil, das stromab des Servoventils und stromauf der Steuerleitung angeordnet ist. Das Sicherungsventil gibt einen Grenzeinstellwinkel der Propellerblätter des Propellers vor und weist ein Stellglied auf, das mechanisch mit einer mechanischen Einstellwinkelerfassungseinrichtung gekoppelt ist, die bei einem Einstellwinkel der Propellerblätter, der unter dem minimalen Einstellwinkel liegt, eine Betätigung erfährt. Beim Unterschreiten des minimalen Einstellwinkels der Propellerblätter reduziert das Sicherungsventil im Störungsfall den Steuerdruck in der Steuerleitung. Ein Störungsfall liegt beispielsweise vor, wenn eine elektronische Einstellwinkelmesseinrichtung, die mit dem Servoventil gekoppelt ist, oder das Servoventil selbst ausfällt.

Die mechanische Einstellwinkelerfassungseinrichtung kann einen Messhebel umfassen, der vorzugsweise mit einer insbesondere als Wegmesseinrichtung ausgebildeten Positionsmesseinrichtung verbunden ist, deren Messsignal dem Steuergerät übergeben wird. Das Steuergerät gibt im Normalbetrieb ein Regelsignal an das Servoventil aus, das den Steuerdruck in der Steuerleitung einstellt. Wenn aber die Positionsmesseinrichtung ausfällt, kann kein entsprechendes Steuersignal generiert werden. In diesem Falle greift bei einem Erreichen eines Grenzeinstellwinkels von beispielsweise 14° das Sicherungsventil ein, dessen Stellglied bzw. dessen Ventilschieber mit dem Messhebel verbunden ist. Der Messhebel ist insbesondere an einem flugzeugfesten Lagerpunkt angelenkt und mit einem Blattwinkelmessring verbunden, der bei einem Unterschreiten eines minimal zulässigen Propellereinstellwinkels von beispielsweise 15° von einer in dem Propeller angeordneten, von dem Steuerdruck beaufschlagten Kolbeneinheit in mechanischer Weise verstellt wird.

Um die Propellerblätter des hydraulischen Verstellpropellers überhaupt in eine Umkehrschubstellung verstellen zu können, weist eine spezielle Ausführungsform der Steuervorrichtung nach der Erfindung des Weiteren ein Umkehrschub-Freigabe-Ventil (Beta Enable Valve) auf, das über eine erste Speiseleitung mit der Druckmindereinrichtung in Verbindung steht und über eine zweite Speiseleitung mit dem Servoventil in Verbindung steht. In einer ersten Schaltstellung des Umkehrschub-Freigabe-Ventils ist die erste Speiseleitung mit der Steuerleitung verbunden. Damit ist ein Verstellen der Propellerblätter in die Umkehrschubstellung gesperrt. In einer zweiten Schaltstellung ist das Servoventil über die zweite Speiseleitung mit der Steuerleitung verbunden. Damit ist die Druckmindereinrichtung wirkungslos geschaltet, d. h. es ist ein Bypass realisiert, der die Druckmindereinrichtung umgeht. Somit können die Propellerblätter mittels des Servoventils in ihre Umkehrschubstellung gebracht werden.

Um in einem Störfall die Propellerblätter durch die Wirkung der Rückstellfeder und ggf. der Fliehgewichte in dem Verstellpropeller in ihre Segelstellung bringen zu können, weist die Steuervorrichtung nach der Erfindung vorzugsweise zudem ein Notfalldruckminderventil (Feathering Valve) auf, das stromauf der Steuerleitung angeordnet ist. Bei einem Schalten bzw. Öffnen des Notfalldruckminderventils fällt der Steuerdruck in der Steuerleitung schlagartig ab, sodass der Druck in dem Druckraum des Verstellpropellers ebenfalls abfällt und die Rückstellmittel des Verstellpropellers die Propellerblätter in ihre Segelstellung bringen.

Bei einer bevorzugten Ausführungsform der Steuervorrichtung nach der Erfindung sind zumindest das Servoventil und die Druckmindereinrichtung in einem Gehäuse angeordnet. Zudem kann das Gehäuse auch das Sicherungsventil, das Umkehrschub-Freigabe-Ventil und/oder das Notfalldruckminderventil aufnehmen.

Die Erfindung hat auch eine Propeller-Einheit eines Luft-, Land-, oder Wasserfahrzeugs zum Gegenstand, umfassend einen hydraulischen Verstellpropeller mit Propellerblättern, deren Einstellwinkel hydraulisch verstellbar ist, sowie eine Steuervorrichtung der vorstehend beschriebenen Art und ein Steuergerät zur elektronischen Ansteuerung des Servoventils in Abhängigkeit von einer Drehzahl des Verstellpropellers.

Weitere Vorteile und vorteilhafte Ausgestaltungen des Gegenstandes der Erfindung sind der Beschreibung, den Zeichnungen und den Patentansprüchen entnehmbar.

Ein Ausführungsbeispiel einer Propeller-Einheit nach der Erfindung ist in den Zeichnungen schematisch vereinfacht dargestellt und wird in der nachfolgenden Beschreibung näher erläutert.

Es zeigt:
- Figur 1:: eine schematische Anordnung einer Propeller-Einheit nach der Erfindung; und
- Figur 2:: eine Steuervorrichtung der Propeller-Einheit zusammen mit einem hydraulischen Verstellpropeller.

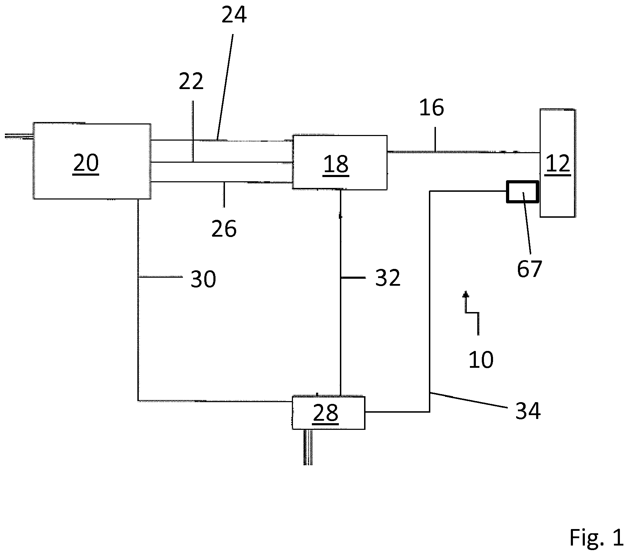

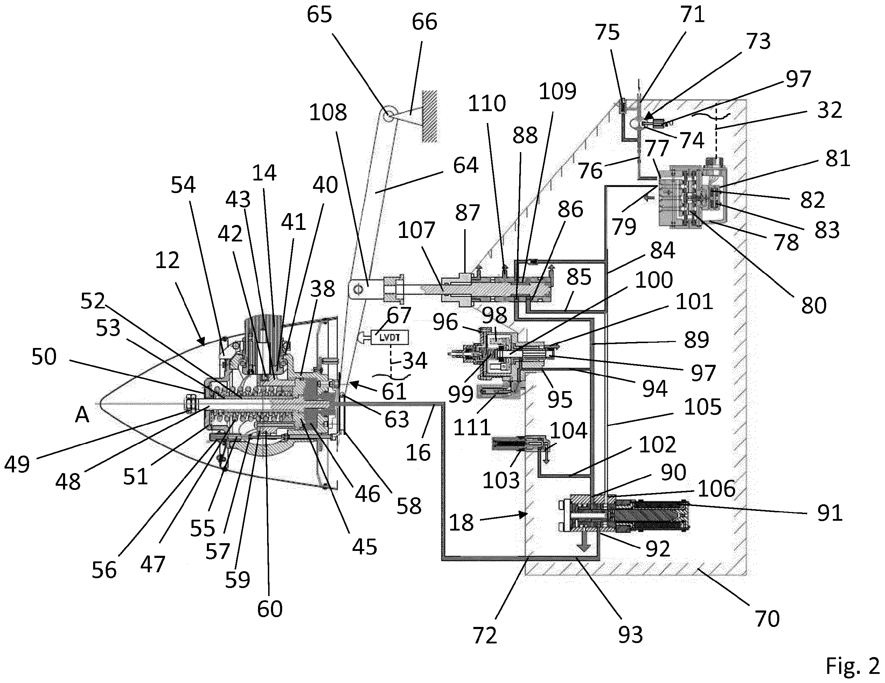

In Figur 1 ist in stark schematischer Weise ein Aufbau einer Propellereinheit 10 für ein Flugzeug dargestellt, welche eine Antriebsanordnung bildet. Die Propellereinheit 10 umfasst einen hydraulischen Verstellpropeller 12, der in Figur 2 anhand eines Längsschnittes dargestellt ist und Propellerblätter 14 aufweist. Die Propellerblätter 14 sind hinsichtlich ihres Einstellwinkels bzw. Blattwinkels zwischen einer Segelstellung und einer maximalen Umkehrschubstellung hydraulisch verstellbar. In der Segelstellung bieten die Propellerblätter 14 den geringstmöglichen Luftwiderstand. In der Umkehrschubstellung entfalten die Propellerblätter 14 eine Bremswirkung für das Flugzeug, ohne dass hierzu die Drehrichtung des Verstellpropellers 12 geändert werden müsste.

Zum Verstellen des Einstellwinkels der Propellerblätter 14 ist der Verstellpropeller 12 über eine Steuerleitung 16 mit einer Steuervorrichtung 18 verbunden, mittels welcher ein dem Verstellpropeller 12 zur Verfügung gestellter, in der Steuerleitung 16 herrschender Steuerdruck einstellbar ist.

Des Weiteren umfasst die Propellereinheit 10 einen Antrieb 20, der über eine Antriebswelle 22 und ein nicht näher dargestelltes Getriebe die Drehzahl vorgibt, mit der der Verstellpropeller 12 angetrieben ist. Zudem ist der Antrieb 20 über eine Hydraulikölspeiseleitung 24 und eine Rücklaufleitung 26 mit der Steuervorrichtung 18 verbunden. Diese Leitungen 24 und 26 dienen zur Zufuhr und zur Rückführung eines zum Einstellen des Einstellwinkels der Propellerblätter 14 erforderlichen Hydrauliköls.

Die Propellereinheit 10 umfasst zudem ein Steuergerät 28, das eine sog. "FADEC" (Full Authority Digital Engine Control) sein kann. Das Steuergerät 28 ist über eine Signalleitung 30 mit dem Antrieb 20 verbunden, sodass das Steuergerät 28 die jeweils herrschende Drehzahl kennt, mit der der Antrieb 20 arbeitet. Zudem ist das Steuergerät 28 über eine Leitung 32 mit der Steuervorrichtung 18 verbunden, womit das Steuergerät 28 der Steuervorrichtung 18 Steuersignale zur Einstellung des Einstellwinkels der Propellerblätter 14 übergeben kann. Des Weiteren führt zu dem Steuergerät 28 eine Messleitung 34, über die dem Steuergerät 28 im Umkehrschubbetrieb ein Messwert des Einstellwinkels der Propellerblätter 14 zur Verfügung gestellt wird.

Der hydraulische Verstellpropeller 12 umfasst eine Propellernabe 38, an welcher die Propellerblätter 14 zur Einstellung des Einstellwinkels über Blattlager 40 verdrehbar gelagert sind. Die Propellerblätter 14 haben jeweils einen Propellerblattfuß 41, an dessen radial nach innen weisender Stirnseite ein Verstellzapfen 42 angeordnet ist, der in eine korrespondierende Ausnehmung eines verfahrbaren Gleitsteins 43 eingreift, der an einer Kolbeneinheit 45 befestigt ist, die an einen Druckraum 46 grenzt, in welchem der Steuerdruck zum Verstellen des Einstellwinkels der Propellerblätter 14 mittels der Steuervorrichtung 18 einstellbar ist. Die Kolbeneinheit 45 ist mittels einer Rückstellfederanordnung 47 in Richtung einer Stellung vorgespannt, die der Segelstellung der Propellerblätter 14 entspricht. Die aus Druckfedern gebildete Rückstellfederanordnung 47 umgreift eine zentrale Führungsstange 48, welche die Kolbeneinheit 45 durchgreift und zusammen mit dieser verschiebbar ist. Stirnseitig ist die Führungsstange 48 mit Anschlagmuttern 49 versehen, von denen die innen liegende in der Segelstellung an einem entsprechenden Gegenanschlag 50 eines Gehäuses 51 der Propellernabe 38 anliegt.

Die Führungsstange 48 ist von einer Buchse 52 umschlossen, die mit ihrer einen Stirnseite durch die Rückstellfederanordnung 47 gegen die Kolbeneinheit 45 gedrückt ist und mit ihrer zweiten Stirnseite 53 einen Anschlag bildet, der einen maximalen Blattwinkel in einer Umkehrschubstellung der Propellerblätter 14 definiert.

Bei einer Rotation des Verstellpropellers 12, d.h. im Betrieb desselben wird zudem durch Fliehgewichte 54 ein Verstellmoment auf die Propellerblätter 14 ausgeübt, das in Richtung der Segelstellung derselben wirkt.

Zur Messung des Einstellwinkels bzw. Blattwinkels der Propellerblätter 14 im Umkehrschubbetrieb weist der Verstellpropeller 12 eine Blattwinkelpositionsstange 55 auf, die in einem Federgehäuse 56 verschiebbar gelagert ist und jeweils mittels einer in dem Federgehäuse 56 angeordneten Rückstellfeder in Richtung einer in Figur 2 dargestellten Ruhestellung vorgespannt ist. Die Blattwinkelpositionsstange 55 ist an ihrer der Rückstellfeder abgewandten Seite mit einem Blattwinkelmessring 58 verbunden, der bezüglich einer Achse A des Verstellpropellers 12 konzentrisch angeordnet ist und über dessen axiale Stellung im Umkehrschubbetrieb der Einstellwinkel der Propellerblätter 14 ermittelbar ist.

Zum Verschieben der Blattwinkelpositionsstange 55 in der Umkehrschubstellung der Propellerblätter 14 ist an dem Gleitstein 43 ein Frontstück 59 angeordnet, das mit einem Gabelstück 60 die Blattwinkelpositionsstange 55 umgreift. In der Segelstellung der Propellerblätter 14 hat das Gabelstück 60 einen maximalen Abstand von einer einen Anschlag bildenden Stoppmutter 57, die auf die Blattwinkelpositionsstange 55 aufgebracht ist. Die Stoppmutter 57 definiert einen Anschlag für die Kolbeneinheit 45, der einem in einem normalen Flugbetrieb kleinstmöglichen Einstellwinkel der Propellerblätter 14 zugeordnet ist, welcher im vorliegenden Fall 15° beträgt. Wird ausgehend von dieser Anschlagstellung durch Erhöhung des Drucks in dem Druckraum 46 die Kolbeneinheit 45 weiter gegen die Kraft der Rückstellfederanordnung 47 verfahren und dadurch die Blattwinkelpositionsstange 55 gegen die Kraft der in dem Federgehäuse 56 angeordneten Rückstellfeder verschoben, liegt eine Umkehrschubstellung der Propellerblätter 14 vor. Der zugeordnete Einstellwinkel der Propellerblätter 14 wird dann mittels einer Einstellwinkelerfassungseinrichtung 61 erfasst, die drehbar mit dem Blattwinkelmessring 58 verbunden ist und die einen über ein Gelenk 63 angelenkten Messhebel 64 umfasst, der mit seinem dem Gelenk 63 abgewandten Ende über ein Gelenk 65 an ein triebwerkfestes Lager 66 angelenkt ist. Der Messhebel 64 ist wiederum mit einem als sogenannter LVDT (Linear Variable Differential Transformer) ausgebildeten Wegmesssensor 67 verbunden, welcher über die Messleitung 34 mit dem Steuergerät 28 verbunden ist.

Der Druckraum 46, an den die Kolbeneinheit 45 grenzt, ist mit der Steuerleitung 16 verbunden, über die der in dem Druckraum 46 herrschende Druck eingestellt wird, durch den wiederum der Einstellwinkel der Propellerblätter 14 definiert ist.

Die Steuervorrichtung 18 zur Einstellung des Steuerdrucks in der Steuerleitung 16 umfasst ein Gehäuse 70, das einteilig oder mehrteilig ausgeführt sein kann und das mit einem Zulaufanschluss 71 für die Hydraulikölspeiseleitung 24 und einem nicht näher dargestellten Rücklaufanschluss für die Rücklaufleitung 26 versehen ist. Zudem weist das Gehäuse 70 einen Ausgangsanschluss 72 für die Steuerleitung 16 auf, an dem der Steuerdruck zur Verfügung gestellt wird.

Stromab des Zulaufanschlusses 71 umfasst die Steuervorrichtung 18 eine Druckerzeugungseinrichtung 73, die einen konstanten Basisdruck erzeugt und eine Zahnradpumpe 74 und ein Rückschlagventil 75 umfasst. Die Zahnradpumpe 74 ist über eine Antriebswelle 97 von dem Antrieb 20 bzw. einem Getriebe desselben angetrieben.

Stromabseitig ist die Zahnradpumpe 74 über eine Leitung 76 mit einem Eingang 77 eines Servoventils 78 verbunden, welches über die Leitung 32 von dem Steuergerät 28 angesteuert wird. Das Servoventil 78 dient zur Einstellung des Steuerdrucks in der Steuerleitung 16 ausgehend von dem von der Druckerzeugungseinrichtung 73 zur Verfügung gestellten Basisdruck. Dieser Steuerdruck liegt im Normalbetrieb an einem Ausgang 79 des Servoventils 78 vor. Das Servoventil 78 hat zur Einstellung des Steuerdrucks ein Ventilelement 80, dessen Stellung den Ausgangsdruck des Servoventils 78 definiert und dessen Stellung durch eine elektromagnetische Einheit 81 vorgegeben wird, welche eine elektromagnetische Hauptstelleinrichtung 82 und eine elektromagnetische Reservestelleinrichtung 83 umfasst, die bei einem Ausfall der elektromagnetischen Hauptstelleinrichtung 82 deren Funktion zum Betätigen des Ventilelements 80 übernimmt.

Der Ausgang 79 des Servoventils 78 ist über Leitungen 84 und 85 mit einem Eingang 86 eines Sicherungsventils 87 verbunden, dessen Ausgang 88 über eine Leitung 89 mit einem ersten Eingang 90 eines als Magnetventil ausgebildeten Umkehrschub-Freigabe-Ventils 91 verbunden ist, dessen Ausgang 92 über eine Leitung 93 zu dem Ausgangsanschluss 72 der Steuervorrichtung 18 führt. Von der Leitung 84 zweigt außerdem eine Leitung 105 ab, die zu einem zweiten Eingang 106 des Umkehrschub-Freigabe-Ventils 91 führt.

Stromab des Sicherungsventils 87 und stromauf des Umkehrschub-Freigabe-Ventils 91 zweigt von der Leitung 89 eine Leitung 94 ab, die mit einem Eingang 95 einer Druckmindereinrichtung 96 verbunden ist, welche bei einem Ausfall des Servoventils 78 den Steuerdruck in der Steuerleitung 16 in Abhängigkeit von einer Drehzahl des Verstellpropellers 12 ändert. Die ein Ventil darstellende Druckmindereinrichtung 96 ist von der Antriebswelle 97 angetrieben, die mit dem Antrieb 20 bzw. einem Getriebe des Antriebs 20 gekoppelt ist und die Fliehgewichte 98 antreibt, die in Anhängigkeit von der Drehzahl der Antriebswelle 97 die Stellung eines Ventilschiebers 100 definieren, auf den eine Vorspannfeder 99 wirkt. Ab einer bestimmten Drehzahl verstellen die Fliehgewichte 98 den Ventilschieber 100 gegen die Kraft der Vorspannfeder 99 so weit, dass die Druckmindereinrichtung 96 öffnet und einen Fluidfluss von dem Eingang 95 zu einem Ausgang 101 der Druckmindereinrichtung 96 freigibt, welcher zu einem Hydraulikölsumpf bzw. der Rücklaufleitung 26 führt. Durch ein Öffnen der Druckmindereinrichtung 96 kann so der in der Leitung 89 und damit der in der Steuerleitung 16 herrschende Druck abgesenkt werden.

Des Weiteren umfasst die Druckmindereinrichtung 96 ein Testventil 111, mittels dessen die ordnungsgemäße Funktion der Druckmindereinrichtung 96 geprüft werden kann.

Zudem zweigt von der Leitung 89 eine Leitung 102 ab, die zu einem Segelstellungsventil 103 führt, bei dessen Betätigung ein spontaner Druckabfall in der Leitung 89 erzeugt werden kann und dessen Ausgang 104 ebenfalls zu der Rücklaufleitung 26 und damit zu dem Hydraulikölsumpf führt. Das Segelstellungsventil 103, das also ein Notfalldruckminderventil bildet, ist als einfaches Magnetventil ausgebildet.

Das Umkehrschub-Freigabe-Ventil 91 hat zwei Schaltstellungen. In einer ersten Schaltstellung, in der das Umkehrschub-Freigabe-Ventil 91 unbestromt ist, ist der erste Eingang 90 und damit die eine erste Speiseleitung darstellende Leitung 89 mit dem Ausgang 92 verbunden, sodass ein Verstellen der Propellerblätter 14 in eine Umkehrschubstellung bzw. in einen dementsprechenden Einstellwinkel gesperrt ist. In einer zweiten Schaltstellung, in der das Umkehrschub-Freigabe-Ventil 91 bestromt ist, ist der zweite Eingang 106 mit dem Ausgang 92 verbunden. Damit kann mittels des Servoventils 78 über die Leitung 84 und die Leitung 105, welche eine zweite Speiseleitung des Umkehrschub-Freigabe-Ventils 91 darstellt, der in der Steuerleitung 16 und in dem Druckraum 46 des Verstellpropellers 12 herrschende Druck soweit erhöht werden, dass die Propellerblätter 14 in ihre Umkehrschubstellung gedreht werden können, sodass sie einen negativen Einstellwinkel haben.

Das Sicherungsventil 87 weist einen ein Stellglied darstellenden Ventilschieber 107 auf, welcher über ein Anschlussstück 108 mit dem Messhebel 64 verbunden ist. Der Ventilschieber 107 bzw. dessen Steuernut 109 ist bezüglich dem Eingang 86 und einem Rücklaufanschluss 110 so ausgelegt, dass bei Erreichen eines bestimmten Grenzeinstellwinkels von beispielsweise 14°, der über die Einstellwinkelerfassungseinrichtung 61 und das Anschlussstück 108 in mechanischer Weise an den Ventilschreiber 107 weitergegeben wird, das in der Leitung 85 zu dem Sicherungsventil 87 geführte Hydrauliköl zu dem Rücklaufanschluss 110 des Sicherungsventils 87 geführt wird, wodurch ein Druckabfall in der Leitung 89 erfolgt und damit auch in der ersten Schaltstellung des Umkehrschub-Freigabe-Ventils 91 der Steuerdruck in der Steuerleitung 16 abfällt. Damit werden die Propellerblätter 14 durch die Kraft der Rückstellfederanordnung 47 und durch die Fliehgewichte 54 in Richtung ihrer Segelstellung verstellt, d.h. der Einstellwinkel wird vergrößert.

Die vorstehend beschriebene Propellereinheit 10 arbeitet in nachfolgend beschriebener Weise.

In einem Normalbetrieb bzw. im Flugbetrieb wird der Verstellpropeller 12 mittels des Antriebs 20 mit einer konstanten Drehzahl angetrieben. Der durch den Verstellpropeller 12 ausgeübte Schub wird über den Einstellwinkel der Propellerblätter 14 eingestellt. Die Verstellung des Einstellwinkels erfolgt über den in dem Druckraum 46 bzw. der Steuerleitung 16 herrschenden Hydrauliköldruck. Der Hydrauliköldruck wird durch das Servoventil 78 der Steuervorrichtung 18 vorgegeben. Im Flugbetrieb befindet sich hierbei das Umkehrschub-Freigabe-Ventil 91 in seiner ersten Schaltstellung, d. h. es verbindet die eine erste Speiseleitung darstellende Leitung 89 mit der Steuerleitung 16, sodass ein Fluidfluss zwischen der Leitung 105 und dem Ausgang 92 des Umkehrschub-Freigabe-Ventils 91 gesperrt ist.

Wenn die Propellerblätter 14 bezüglich ihres Einstellwinkels in eine Umkehrschubstellung gebracht werden sollen und damit der Hydrauliköldruck in dem Druckraum 46 entsprechend erhöht werden muss, wird das Umkehrschub-Freigabe-Ventil 91 in die zweite Schaltstellung gebracht, wodurch die Leitung 105 mit dem Ausgang 92 und der Steuerleitung 16 verbunden ist und ein Fluidfluss zwischen dem ersten Eingang 90 und dem Ausgang 92 des Umkehrschub-Freigabe-Ventils 91 gesperrt ist. Der Einstellwinkel der Propellerblätter 14 kann hierbei mittels des Wegmesssensors 67 ermittelt werden, dessen Messwert dem Steuergerät 28 zur Verfügung gestellt wird. Dieses kann wiederum über die Leitung 32 entsprechende Steuersignale an das Servoventil 78 ausgeben, wodurch der Druck in der Steuerleitung 16 geändert werden kann. In der zweiten Schaltstellung des Umkehrschub-Freigabe-Ventils 91 sind das Sicherungsventil 87, die Druckmindereinrichtung 96 und das Segelstellungsventil 103 funktionsfrei, d. h. es liegt gegenüber diesen ein Bypass vor.

Der Wegmesssensor 67 übermittelt insbesondere bei einem minimalen Einstellwinkel der Propellerblätter 14 von etwa 15° ein entsprechendes Signal an das Steuergerät 28, sodass über das Servoventil 78 der Druck in der Steuerleitung 16 reduziert werden kann und damit eine Verstellung der Propellerblätter 14 in ihre Umkehrschubstellung verhindert wird.

Wenn das Servoventil 78 ausfällt, d. h. die beiden elektromagnetischen Stelleinrichtungen 82 und 83 ausfallen, liegt am Ausgang 79 der von der Druckerzeugungseinrichtung 73 erzeugte Basisdruck vor. In der ersten Schaltstellung des Umkehrschub-Freigabe-Ventils 91, die im Flugbetrieb des betreffenden Flugzeugs stets gegeben ist, würde damit der Basisdruck über die Leitungen 84, 85, 89 und 93 der Steuerleitung 16 und damit dem Druckraum 46 zur Verfügung gestellt. Dies würde wiederum bewirken, dass der Einstellwinkel der Propellerblätter 14 in Richtung der Umkehrschubstellung verstellt wird bzw. sogar die Umkehrschubstellung eingestellt werden würde. Dies hat zur Folge, dass sich durch die zunächst erfolgende Verringerung des Einstellwinkels die Drehzahl des Verstellpropellers 12 erhöht. Die Drehzahlerhöhung führt zu einer Erhöhung der Drehzahl der Antriebswelle 97 der Druckmindereinrichtung 96. Wenn diese Drehzahl einen bestimmten Grenzwert, beispielsweise 103% der maximal zulässigen Drehzahl erreicht, öffnet die Druckmindereinrichtung 96, wodurch der Druck in der Leitung 89 und damit auch in der Leitung 93, der Steuerleitung 16 und dem Druckraum 46 abfällt, was ein Verstellen des Einstellwinkels der Propellerblätter 14 in Richtung der Segelstellung, d. h. hin zu größeren Einstellwinkeln bewirkt. Dies wiederum führt zu einer Verringerung der Drehzahl des Verstellpropellers 12 aufgrund des größeren Einstellwinkels der Propellerblätter 14.

Das Sicherungsventil 87 verhindert bei einem Ausfall des Servoventils 78 und/oder des Wegmesssensors 67 eine Verstellung der Propellerblätter 14 in Umkehrschubstellung. Dies erfolgt dadurch, dass über die Blattwinkelpositionsstange 55 und die Blatteinstellwinkelerfassungseinrichtung 61 bei Erreichen eines minimalen Einstellwinkels von beispielsweise 15° der Ventilschieber 107 des Sicherungsventils 87 betätigt wird und so bei Erreichen eines Grenzblatteinstellwinkels von beispielsweise 14° das Sicherungsventil 87 öffnet und den Druck in der Leitung 89 und damit den Druck in der Leitung 93 und der Steuerleitung 16 und dem Druckraum 46 mindert, was wiederum eine Verstellung der Propellerblätter 14 in Richtung der Segelstellung bewirkt, und zwar bis der Messhebel 64 den Ventilschieber 107 wieder in Schließstellung gebracht hat. Durch eine Schwingbewegung des Ventilschiebers 107 wird dann der Druck in der Steuerleitung 16 im Wesentlichen konstant gehalten.

### Bezugszeichenliste

- 10: Propellereinheit
- 12: hydraulischer Verstellpropeller
- 14: Propellerblatt
- 16: Steuerleitung
- 18: Steuervorrichtung
- 20: Antrieb
- 22: Antriebswelle
- 24: Hydraulikölspeiseleitung
- 26: Rücklaufleitung
- 28: Steuergerät
- 30: Signalleitung
- 32: Leitung
- 34: Messleitung
- 38: Propellernabe
- 40: Blattlager
- 41: Propellerblattfuß
- 42: Verstellzapfen
- 43: Gleitstein
- 45: Kolbeneinheit
- 46: Druckraum
- 47: Rückstellfederanordnung
- 48: Führungsstange
- 49: Anschlagmutter
- 50: Gegenanschlag
- 51: Gehäuse
- 52: Buchse
- 53: Stirnseite
- 54: Fliehgewicht
- 55: Blattwinkelpositionsstange
- 56: Federgehäuse
- 57: Stopmutter
- 58: Blattwinkelmessring
- 59: Frontplatte
- 60: Gabelstück
- 61: Einstellwinkelerfassungseinrichtung
- 63: Gelenk
- 64: Messhebel
- 65: Gelenk
- 66: Lager
- 67: Wegmesssensor
- 70: Gehäuse
- 71: Zulaufanschluss
- 72: Ausgangsanschluss
- 73: Druckerzeugungseinrichtung
- 74: Zahnradpumpe
- 75: Rückschlagventil
- 76: Leitung
- 77: Eingang
- 78: Servoventil
- 79: Ausgang
- 80: Ventilelement
- 81: elektromagnetische Einheit
- 82: elektromagnetische Hauptstelleinrichtung
- 83: elektromagnetische Reservestelleinrichtung
- 84: Leitung
- 85: Leitung
- 86: Eingang
- 87: Sicherungsventil
- 88: Ausgang
- 89: erste Speiseleitung
- 90: erster Eingang
- 91: Umkehrschub-Freigabe-Ventil
- 92: Ausgang
- 93: Leitung
- 94: Leitung
- 95: Eingang
- 96: Druckmindereinrichtung
- 97: Antriebswelle
- 98: Fliehgewichte
- 99: Vorspannfeder
- 100: Ventilschieber
- 101: Ausgang
- 102: Leitung
- 103: Segelstellungsventil
- 104: Ausgang
- 105: Leitung
- 106: zweiter Eingang
- 107: Ventilschieber
- 108: Anschlussstück
- 109: Steuernut
- 110: Rücklaufanschluss
- 111: Testventil

- A: Achse

## Patentansprüche

1. Propeller-Einheit eines Luft-, Land-, oder Wasserfahrzeugs mit einem hydraulischen Verstellpropeller (12) mit Propellerblättern (14), deren Einstellwinkel hydraulisch verstellbar ist, sowie einer Steuervorrichtung umfassend:
- eine Hydraulikölspeiseleitung (24);
- eine mit dem Verstellpropeller (12) verbindbare Steuerleitung (16);
- eine mit der Hydraulikölspeiseleitung (24) verbundene Druckerzeugungseinrichtung (73), die Hydrauliköl mit einem Basisdruck zur Verfügung stellt;
- ein Servoventil (78), das stromab der Druckerzeugungseinrichtung (73) angeordnet ist, dessen Eingangsdruck der Basisdruck ist und dessen Ausgangsdruck in einem Normalbetrieb einen Steuerdruck in der Steuerleitung (16) definiert und das mit einem Steuergerät (28) verbunden ist, das ein Steuersignal zur Veränderung des Steuerdrucks liefert; und
- Druckreduziermittel, die stromab des Servoventils (78) und stromauf der Steuerleitung (16) angeordnet sind, die mechanisch angesteuert sind und die bei einem Ausfall des Servoventils (78) den Steuerdruck in der Steuerleitung (16) ändern,
wobei das Servoventil (78) ein Ventilelement (80) aufweist, dessen Stellung den Ausgangsdruck des Servoventils (78) definiert, und eine elektromagnetische Hauptstelleinrichtung (82) und eine elektromagnetische Reservestelleinrichtung (83) für das Ventilelement (80) umfasst, und die Reservestelleinrichtung (83) bei einem Ausfall der Hauptstelleinrichtung (82) deren Funktion zum Betätigen des Ventilelements (80) übernimmt,
wobei das Steuergerät (28) als FADEC ausgebildet ist und zur elektronischen Ansteuerung des Servoventils (78) in Abhängigkeit von einer Drehzahl des Verstellpropellers (12) dient.

2. Propeller-Einheit nach Anspruch 1, **dadurch gekennzeichnet, dass** die Druckreduziermittel eine Druckmindereinrichtung (96) umfassen, die bei einem Ausfall des Servoventils (78) den Steuerdruck in der Steuerleitung (16) in Abhängigkeit von einer Drehzahl des Propellers (12) ändert.

3. Propeller-Einheit nach Anspruch 2, **dadurch gekennzeichnet, dass** die Druckmindereinrichtung (96) eine Antriebswelle (97) aufweist, die mit einem Getriebe eines Antriebs des Verstellpropellers (12) gekoppelt ist.

4. Propeller-Einheit nach Anspruch 3, **dadurch gekennzeichnet, dass** die Druckmindereinrichtung (96) einen Ventilschieber (100) aufweist, dessen Stellung durch Fliehgewichte (98) definiert ist, die von der Antriebswelle (97) angetrieben sind.

5. Propeller-Einheit nach einem der Ansprüche 1 bis 4, **dadurch gekennzeichnet, dass** die Druckreduziermittel ein Sicherungsventil (87) umfassen, welches stromab des Servoventils (78) und stromauf der Steuerleitung (16) angeordnet ist, welches ein Stellglied (107) aufweist, das mechanisch mit einer mechanischen Einstellwinkelerfassungseinrichtung (61) gekoppelt ist, die bei einem Einstellwinkel der Propellerblätter (14), der unter einem minimalen Einstellwinkel liegt, eine Betätigung erfährt, wobei das Sicherungsventil (87) bei Erreichen eines Grenzeinstellwinkels der Propellerblätter (14) im Störungsfall den Steuerdruck in der Steuerleitung (16) mindert.

6. Propeller-Einheit nach Anspruch 5, **dadurch gekennzeichnet, dass** die mechanische Einstellwinkelerfassungseinrichtung (61) einen Messhebel (64) umfasst, der vorzugsweise mit einer Positionsmesseinrichtung verbunden ist, deren Messsignal dem Steuergerät (28) übergeben wird und die insbesondere ein Wegmesssensor (67) ist.

7. Propeller-Einheit nach einem der Ansprüche 1 bis 6, **dadurch gekennzeichnet, dass** die Druckreduziermittel stromabseitig über eine erste Speiseleitung (89) mit einem Umkehrschub-Freigabe-Ventil (91) verbunden sind, das über eine zweite Speiseleitung (105) mit dem Servoventil (78) in Verbindung steht, wobei in einer ersten Schaltstellung des Umkehrschub-Freigabe-Ventils (91) die erste Speiseleitung (89) mit der Steuerleitung (16) verbunden ist und ein Verstellen der Propellerblätter in eine Umkehrschubstellung gesperrt ist und in einer zweiten Schaltstellung des Umkehrschub-Freigabe-Ventils (91) die zweite Speiseleitung (105) mit der Steuerleitung (16) verbunden ist und ein Verstellen der Propellerblätter (14) mittels des Servoventils (78) in eine Umkehrschubstellung freigegeben ist.

8. Propeller-Einheit nach einem der Ansprüche 1 bis 7, **gekennzeichnet durch** ein Notfalldruckminderventil, das stromauf der Steuerleitung (16) angeordnet ist.

9. Propeller-Einheit nach einem der Ansprüche 1 bis 8, **dadurch gekennzeichnet, dass** das Servoventil (78) und die Druckreduziermittel in einem Gehäuse (70) angeordnet sind.

10. Propeller-Einheit nach Anspruch 8 in Verbindung mit Anspruch 7, **dadurch gekennzeichnet, dass** das Umkehrschub-Freigabe-Ventil (91) in dem Gehäuse (70) angeordnet ist.

11. Propeller-Einheit nach Anspruch 9 oder 10 in Verbindung mit Anspruch 8, **dadurch gekennzeichnet, dass** das Notfalldruckminderventil in dem Gehäuse (51) angeordnet ist.

## Claims

1. A propeller unit of an aircraft, land vehicle or water vehicle having a hydraulic variable-pitch propeller (12) with propeller blades (14), the pitch/setting angle of which propeller blades is hydraulically adjustable, and having a control apparatus comprising:
- a hydraulic oil feed line (24);
- a control line (16) which can be connected to the variable-pitch propeller (12);
- a pressure generating device (73) which is connected to the hydraulic oil feed line (24) and provides hydraulic oil with a basic pressure;
- a servo valve (78) which is arranged downstream of the pressure generating device (73) and whose input pressure is the basic pressure and whose output pressure during normal operation defines a control pressure in the control line (16) and which is connected to a controller (28) which delivers a control signal for changing the control pressure; and
- pressure reducing means which are arranged downstream of the servo valve (78) and upstream of the control line (16) and which are mechanically actuated and which, in the event of a failure of the servo valve (78), change the control pressure in the control line (16),
wherein the servo valve (78) has a valve element (80), the position of said valve element defining the output pressure of the servo valve (78), and comprises an electromagnetic main actuating device (82) and an electromagnetic reserve actuating device (83) for the valve element (80), and wherein the reserve actuating device (83), in the event of a failure of the main actuating device (82), takes over the function of said main actuating device for operating the valve element (80),
wherein the controller (28) is realised as a FADEC and serves to electronically actuate the servo valve (78) depending on a rotation speed of the variable-pitch propeller (12).

2. The propeller unit as claimed in claim 1, **characterised in that** the pressure reducing means comprise a pressure lowering device (96) which, in the event of a failure of the servo valve (78), changes the control pressure in the control line (16) depending on a rotation speed of the propeller (12).

3. The propeller unit as claimed in claim 2, **characterised in that** the pressure lowering device (96) has a drive shaft (97) which is coupled to a transmission of a drive of the variable-pitch propeller (12).

4. The propeller unit as claimed in claim 3, **characterised in that** the pressure lowering device (96) has a valve slide (100), the position of which valve slide is defined by centrifugal weights (98) which are driven by the drive shaft (97).

5. The propeller unit as claimed in one of claims 1 to 4, **characterised in that** the pressure reducing means comprise a safety valve (87) which is arranged downstream of the servo valve (78) and upstream of the control line (16), said servo valve (78) having an actuating member (107) which is mechanically coupled to a mechanical pitch/setting angle detecting device (61) which is operated at a pitch/setting angle of the propeller blades (14) which lies below a minimum pitch/setting angle, wherein the safety valve (87) lowers the control pressure in the control line (16) when a limit pitch/setting angle of the propeller blades (14) is reached in the event of a fault.

6. The propeller unit as claimed in claim 5, **characterised in that** the mechanical pitch/setting angle detecting device (61) comprises a measuring lever (64) which is preferably connected to a position measuring device, the measuring signal from which position measuring device is passed on to the controller (28) and which position measuring device is, in particular, a travel measuring sensor (67).

7. The propeller unit as claimed in one of claims 1 to 6, **characterised in that** the pressure reducing means are connected, on the downstream side, to a reverse thrust enable valve (91) via a first feed line (89), which reverse thrust enable valve is connected to the servo valve (78) via a second feed line (105), where, in a first switching position of the reverse thrust enable valve (91), the first feed line (89) is connected to the control line (16) and adjustment of the propeller blades to a reverse thrust position is blocked and, in a second switching position of the reverse thrust enable valve (91), the second feed line (105) is connected to the control line (16) and adjustment of the propeller blades (14) to a reverse thrust position by means of the servo valve (78) is enabled.

8. The propeller unit as claimed in one of claims 1 to 7, **characterised by** an emergency pressure lowering valve which is arranged upstream of the control line (16).

9. The propeller unit as claimed in claim one of claims 1 to 8, **characterised in that** the servo valve (78) and the pressure reducing means are arranged in a housing (70).

10. The propeller unit as claimed in claim 8 in conjunction with claim 7, **characterised in that** the reverse thrust enable valve (91) is arranged in the housing (70).

11. The propeller unit as claimed in claim 9 or 10 in conjunction with claim 8, **characterised in that** the emergency pressure lowering valve is arranged in the housing (51).

## Revendications

1. Unité d'hélice d'un aéronef, d'un véhicule terrestre ou d'un navire comportant une hélice à pas variable (12) hydraulique ayant des pales de l'hélice (14) dont l'angle d'incidence est ajustable de façon hydraulique et l'unité d'hélice comportant un dispositif de commande comprenant :
- une conduite d'alimentation d'huile hydraulique (24) ;
- une ligne de commande (16) qui peut être reliée à l'hélice à pas variable (12) ;
- un moyen de génération de pression (73) qui est relié à la conduite d'alimentation d'huile hydraulique (24) et fournit de l'huile hydraulique à une pression de base ;
- une servovanne (78) qui est disposée en aval du moyen de génération de pression (73), la pression d'alimentation de ladite servovanne (78) étant la pression de base et la pression de sortie de ladite servovanne (78) définissant une pression de commande dans la ligne de commande (16) en fonctionnement normal et ladite servovanne (78) étant reliée à un appareil de commande (28) qui fournit un signal de commande pour changer la pression de commande ; et
- des moyens réducteurs de pression qui sont disposés en aval de la servovanne (78) et en amont de la ligne de commande (16), qui sont actionnés mécaniquement et qui changent la pression de commande dans la ligne de commande (16) en cas de défaillance de la servovanne (78),
dans lequel la servovanne (78) comporte un élément de vanne (80) dont la position définit la pression de sortie de la servovanne (78) et comprend un moyen d'actionnement principal (82) électromagnétique et un moyen d'actionnement de réserve (83) électromagnétique pour l'élément de vanne (80), et dans lequel le moyen d'actionnement de réserve (83) assume la fonction du moyen d'actionnement principal (82) pour actionner l'élément de vanne (80) en cas de défaillance du moyen d'actionnement principal (82),
dans lequel l'appareil de commande (28) est réalisé comme FADEC et sert à actionner la servovanne (78) électroniquement en fonction d'une vitesse de rotation de l'hélice à pas variable (12).

2. Unité d'hélice selon la revendication 1, **caractérisée en ce que** les moyens réducteurs de pression comprennent un réducteur de pression (96) qui change la pression de commande dans la ligne de commande (16) en fonction d'une vitesse de rotation de l'hélice (12) en cas de défaillance de la servovanne (78).

3. Unité d'hélice selon la revendication 2, **caractérisée en ce que** le réducteur de pression (96) comporte un arbre d'entraînement (97) qui est couplé à une transmission d'un entraînement de l'hélice à pas variable (12).

4. Unité d'hélice selon la revendication 3, **caractérisée en ce que** le réducteur de pression (96) comporte une glissière de vanne (100) dont la position est définie par des poids centrifuge (98) qui sont entraînés par l'arbre d'entraînement (97).

5. Unité d'hélice selon l'une quelconque des revendications 1 à 4, **caractérisée en ce que** les moyens réducteurs de pression comprennent une vanne de sécurité (87) qui est disposée en aval de la servovanne (78) et en amont de la ligne de commande (16), ladite servovanne (78) comportant un actionneur (107) couplé mécaniquement à un moyen d'enregistrement de l'angle d'incidence (61) qui est actionné à un angle d'incidence des pales de l'hélice (14) qui est inférieur à un angle d'incidence minimal, ladite vanne de sécurité (87) réduisant la pression de commande dans la ligne de commande (16) quand un angle d'incidence de seuil des pales de l'hélice (14) est atteint en cas de panne.

6. Unité d'hélice selon la revendication 5, **caractérisée en ce que** le moyen d'enregistrement de l'angle d'incidence (61) comprend un levier de mesure (64) qui est de préférence relié à un moyen de mesure de position dont le signal de mesure est communiqué á l'appareil de commande (28) et qui est notamment un capteur de mesure de mouvement (67).

7. Unité d'hélice selon l'une quelconque des revendications 1 à 6, **caractérisée en ce que** les moyens réducteurs de pression, sur le côté aval, sont reliés à une vanne de libération de poussée inverse (91) par une première conduite d'alimentation (89), ladite vanne de libération de poussée inverse (91) étant reliée à la servovanne (78) par une deuxième conduite d'alimentation (105), dans lequel, dans une première position de commutation de la vanne de libération de poussée inverse (91), la première conduite d'alimentation (89) est reliée à la ligne de commande (16) et un ajustage des pales de l'hélice à une position de poussée inverse est bloqué, et dans lequel, dans une deuxième position de commutation de la vanne de libération de poussée inverse (91), la deuxième conduite d'alimentation (105) est reliée à la ligne de commande (16) et un ajustage des pales de l'hélice (14) à une position de poussée inverse au moyen de la servovanne (78) est débloqué.

8. Unité d'hélice selon l'une quelconque des revendications 1 à 7, **caractérisée par** une vanne réductrice de pression d'urgence qui est disposée en amont de la ligne de commande (16).

9. Unité d'hélice selon l'une quelconque des revendications 1 à 8, **caractérisée en ce que** la servovanne (78) et les moyens réducteurs de pression sont disposés dans un boîtier (70).

10. Unité d'hélice selon la revendication 8 conjointement avec la revendication 8, **caractérisée en ce que** la vanne de libération de poussée inverse (91) est disposée dans le boîtier (70).

11. Unité d'hélice selon la revendication 9 ou 10 conjointement avec la revendication 7, **caractérisée en ce que** la vanne réductrice de pression d'urgence est disposée dans le boîtier (51).
